# EUROPÄISCHE PATENTSCHRIFT

(11) **EP 3 935 692 B1**
(45) Veröffentlichungstag und Bekanntmachung des Hinweises auf die Patenterteilung: **01.05.2024**
(21) Anmeldenummer: 20710123.9
(22) Anmeldetag: 06.03.2020
(51) Int. Cl.: H01M 50/543, H01M 10/06, H01R 11/28

(54) **VERSETZTE POLBUCHSEN UND ENERGIESPEICHERSYSTEM MIT DEN GLEICHEN**
OFFSET POLE SOCKET AND ENERGY STORAGE SYSTEM COMPRISING THE SAME
DOUILLES DE BORNE DÉCALÉES ET SYSTÈME DE STOCKAGE D'ÉNERGIE POURVU DESDITES DOUILLES DE BORNE

(30) Priorität: 07.03.2019 DE 102019105782
(43) Veröffentlichungstag der Anmeldung: 12.01.2022
(73) Patentinhaber: Clarios Germany GmbH & Co. KG, 30419 Hannover (DE)
(72) Erfinder: FIRL, Julian, 31180 Giesen (DE); LEDOUX, Anne-Laure, 30855 Langenhagen (DE); DUDENBOSTEL, Andreas, 31535 Neustadt am Rübenberge (DE)
(74) Vertreter: Meissner Bolte Partnerschaft mbB
(86) Internationale Anmeldenummer: PCT/EP2020/056020
(87) Internationale Veröffentlichungsnummer: WO 2020/178428

(56) Entgegenhaltungen:
- EP-A2- 0 214 532
- WO-A1-2011/106682
- GB-A- 2 122 020
- US-B1- 7 905 384

## Beschreibung

Die vorliegende Erfindung betrifft versetzte Polbuchsen für ein Energiespeichersystem, insbesondere für ein Bleisäure-Energiespeichersystem, und ein Energiespeichersystem mit den gleichen.

Herkömmlicherweise werden versetzte Polbuchsen, d.h. Polbuchsen bei den die Position, an welcher Strom in die Polbuchse eingeleitet wird, versetzt zu der Position angeordnet ist, von der Strom von der Polbuchse abgeleitet wird, integral aus dem Vollen gegossen und zum Einsetzen in ein Gehäuse eines Energiespeichersystems mit Gehäusematerial umgeben bzw. umspritzt. Dabei wird zur Abdichtung des Energiespeichersystems eine Mehrzahl an Vorsprüngen bereitgestellt.

Das Dokument WO 2011/106682 A1 offenbart ebenfalls eine Polbuchse.

Allerdings führt dies unvorteilhafterweise dazu, dass die konventionelle versetzte Polbuchse ein hohes Gewicht aufweist, wodurch insgesamt die Energiedichte des Bleisäure-Energiespeichersystems reduziert wird. Des Weiteren führen Bereiche mit hoher Bleiansammlung dazu, dass sich Lunker und Luft- und/oder Gaseinschlüsse bilden, wodurch die mechanischen Eigenschaften der versetzten Polbuchse reduziert werden. Auch können sich in eben jenen Bereichen Schwindungsrisse und Schwindungseinschlüsse bilden, welche sich ebenso negativ auf die mechanischen Eigenschaften der Polbuchse auswirken, und damit insgesamt auch die elektrische Leitfähigkeit der Polbuchse reduzieren.

Daher liegt der vorliegenden Erfindung die Aufgabe zugrunde, verbesserte Polbuchsen für Energiespeichersysteme bereitzustellen, welche die Nachteile der herkömmlichen Polbuchsen nicht aufweisen, und insbesondere ein geringeres Gewicht bei zumindest im eingesetzten Zustand verbesserten mechanischen Eigenschaften und/oder verbesserte Dichtungseigenschaften aufweisen.

Die der Erfindung zugrundeliegende Aufgabe wird durch die Gegenstände der unabhängigen Patentansprüche 1, 4 und 19 gelöst. Vorteilhafte Weiterbildungen sind in den abhängigen Ansprüchen angegeben.

Demnach wird eine versetzte Polbuchse für ein Energiespeichersystem, insbesondere für ein Bleisäure-Energiespeichersystem, beansprucht, welche Folgendes aufweist: ein Verbindungselement mit einem ersten Endbereich und einem dem ersten Endbereich zumindest im Wesentlichen gegenüberliegenden zweiten Endbereich, ein Anschlusselement, das an dem ersten Endbereich des Verbindungselements angeordnet ist, und das dazu ausgelegt ist, mit elektrischen Verbrauchern elektrisch zu kontaktieren, und ein Kontaktierungselement, das an dem zweiten Endbereich des Verbindungselements angeordnet ist, und das dazu ausgelegt ist, einen Polschaft elektrisch zu kontaktieren. Dabei erstreckt sich das Anschlusselement in eine erste Erstreckungsrichtung von dem Verbindungselement aus, und das Kontaktierungselement erstreckt sich in eine zweite Erstreckungsrichtung von dem Verbindungselement, wobei die zweite Erstreckungsrichtung parallel und in entgegengesetzter Richtung zu der ersten Erstreckungsrichtung verläuft, und zwar derart, dass das Kontaktierungselement versetzt von dem Anschlusselement angeordnet ist. Das Anschlusselement weist einen oberen Bereich zum Kontaktieren der elektrischen Verbraucher und einen unteren Bereich auf, der dazu ausgelegt ist, mit einem Material eines Gehäuses in Eingriff zu kommen, wobei in dem unteren Bereich mindestens eine Nut angeordnet ist.

Die Vorteile der Erfindung liegen auf der Hand. Das Anordnen von Nuten in einem Bereich unterhalb des Anschlussbereiches sorgen für eine verbesserte Sicherung gegenüber Zugbelastungen. Insbesondere wenn die versetzte Polbuchse derart eine Taillierung aufweist, dass das Verbindungselement (in einer Draufsicht auf die Polbuchse) eine Breite aufweist, die kleiner ist als ein Durchmesser des Anschlusselements und/oder kleiner ist als ein Durchmesser des Kontaktierungselements, wird die Sicherheit gegen Herauslösen der versetzten Polbuchse aus einem Gehäuse des Energiespeichersystems bei Zugbelastungen erhöht.

Darüber hinaus kann zur gleichen Zeit Material eingespart werden, wodurch die versetzte Polbuchse leichter wird, und zwar ohne dass die mechanischen Eigenschaften der Polbuchse nachteilig beeinflusst werden, was Materialkosten spart. Ganz im Gegenteil kann durch die Form der erfindungsgemäßen versetzten Polbuchse eine Lunkerbildung bzw. eine Bildung von Luft- und/oder Gaseinschlüssen sowie Schwindungsrisse und Schwindungseinschlüsse vermieden werden, wodurch weniger Ausschuss produziert wird. Dies senkt vorteilhafterweise die Produktionszeiten und -kosten.

Gemäß der Erfindung wird die Nut umlaufend um zumindest das Anschlusselement, und insbesondere zumindest im Wesentlichen umlaufend um das Anschlusselement, das Verbindungselement und das Kontaktierungselement, ausgebildet sein. Dies führt zu einer besseren Sicherung der versetzten Polbuchse gegen Zugbelastungen. Insbesondere kann die abgewickelte Länge der Nut dadurch verlängert werden, dass die versetzte Polbuchse derart tailliert ist, dass das Verbindungselement (in einer Draufsicht auf die Polbuchse) eine Breite aufweist, die kleiner ist als ein Durchmesser des Anschlusselements und/oder kleiner ist als ein Durchmesser des Kontaktierungselements, was zu einer weiteren Erhöhung des Biegewiderstandes und des Widerstandes gegen Herauslösen bei Zugbelastung führt.

Gemäß einem weiteren Aspekt kann der untere Bereich des Anschlusselements eine zusätzliche Nut aufweisen, welche umlaufend um zumindest das Anschlusselement ausgebildet ist, was zu einer weiteren Erhöhung der Sicherheit gegenüber Zugbelastungen führt.

Des Weiteren wird die der Erfindung zugrundeliegende Aufgabe durch eine Polbuchse für ein Energiespeichersystem, insbesondere für ein Bleisäure-Energiespeichersystem, nach Anspruch 4 gelöst. Dabei weist die Polbuchse Folgendes auf: ein Verbindungselement mit einem ersten Endbereich und einem dem ersten Endbereich zumindest im Wesentlichen gegenüberliegenden zweiten Endbereich, ein Anschlusselement, das an dem ersten Endbereich des Verbindungselements angeordnet ist, und das dazu ausgelegt ist, mit elektrischen Verbrauchern elektrisch zu kontaktieren, und ein Kontaktierungselement, das an dem zweiten Endbereich des Verbindungselements angeordnet ist, und das dazu ausgelegt ist, einen Polschaft elektrisch zu kontaktieren. Dabei erstreckt sich das Anschlusselement in eine erste Erstreckungsrichtung von dem Verbindungselement aus, und das Kontaktierungselement erstreckt sich in eine zweite Erstreckungsrichtung von dem Verbindungselement, wobei die zweite Erstreckungsrichtung parallel und in entgegengesetzter Richtung zu der ersten Erstreckungsrichtung verläuft, und zwar derart, dass das Kontaktierungselement versetzt von dem Anschlusselement angeordnet ist. Das Kontaktierungselement weist einen Labyrinthbereich auf, in welchem mindestens ein Vorsprung mit mindestens einem Hinterschnitt ausgebildet ist.

Dadurch wird im eingesetzten Zustand der versetzten Polbuchse ein von einem Gehäuse des Energiespeichersystems eingeschlossener Innenraum gegenüber der äußeren Umgebung abgedichtet, wodurch ein Auslaufen verhindert werden kann. Dadurch entfällt die Notwendigkeit den Dichtungsbereich mittels einer umweltschädlichen Beschichtung behandeln zu müssen, was zum einen die Umwelt schützt und zum anderen die Produktionszeit verkürzt und somit Kosten einspart. Mithilfe des mindestens einen Hinterschnittes kann der Dichtungsweg vorteilhafterweise verlängert werden.

Gemäß einem Aspekt kann mindestens ein Vorsprung vollständig umlaufend ausgebildet sein, was zu einem verbesserten Dichtungseffekt führt.

Gemäß einem Aspekt kann ein Vorsprung (insbesondere ein unter einem vollständig umlaufenden Vorsprung angeordneter Vorsprung) intermittierend und/oder spiralförmig umlaufend ausgebildet ist.

Gemäß einem Aspekt kann mindestens ein Vorsprung einen symmetrischen Querschnitt aufweisen, der insbesondere zumindest im Wesentlichen pfeilförmig oder T-förmig ausgebildet ist. Dadurch kann vorteilhafterweise eine erhöhte Dichtwirkung bei gleichzeitiger einfacher Fertigung erzielt werden.

Gemäß einem Aspekt kann mindestens ein Vorsprung einen asymmetrischen Querschnitt aufweisen, der insbesondere L-förmig oder C-förmig ausgebildet ist, wodurch eine verbesserte Dichtwirkung erzielt werden kann.

Gemäß einem Aspekt kann die Polbuchse eine Taillierung aufweisen, und zwar derart, dass eine Breite des Verbindungselements kleiner ist als der Durchmesser des Anschlusselements und/oder kleiner ist als der Durchmesser des Kontaktierungselements. Dadurch kann vorteilhafterweise bewirkt werden, dass zum einen Material und damit Gewicht eingespart wird, zum anderen dass sich Lunker und/oder andere Gas- und/oder Lufteinschlüsse oder Schwindungsrisse bilden. Ferner kann durch die Taillierung der Polbuchse eine verbesserte Sicherung gegen Herauslösen der versetzten Polbuchse aus dem Gehäuse bei Zugbelastungen erzielt werden (insbesondere in Verbindung mit dem Anordnen einer zumindest im Wesentlichen vollständig das Anschlusselement, das Kontaktierungselement und das Verbindungselement umlaufenden Nut).

Gemäß einem weiteren Aspekt kann dabei mindestens eine Seite des Verbindungselements geradlinig ausgebildet sein, und/oder mindestens eine Seite des Verbindungselements gebogen ausgebildet sein. Somit kann vorteilhafterweise weiter Material und damit Gewicht eingespart werden und die abgewickelte Nutlänge verlängert werden, was zu einer sicheren Positionierung und verbesserten Sicherung gegen Zugbelastungen führt.

Gemäß einem weiteren Aspekt kann das Anschlusselement einteilig, und insbesondere als Konus, ausgebildet sein, was einfach zu fertigen ist und somit vorteilhafterweise die Fertigungszeit und -kosten reduzieren kann.

Gemäß einem weiteren Aspekt kann das Anschlusselement mindestens zweiteilig ausgebildet sein, wobei zumindest ein Gewindeeinsatz von einem Bereich des Anschlusselements umgossen ist. Dadurch kann eine elektrische Verbindung zwischen der versetzten Polbuchse und elektrischen Verbindern einfach mittels Schraubmutterverbindungen bereitgestellt werden, welche schnell montierbar und einfach zu wechseln sind.

Gemäß einem weiteren Aspekt können das Anschlusselement, das Verbindungselement und das Kontaktierungselement integral ausgebildet sein, was einfach und kostengünstig produziert werden kann.

Gemäß einem weiteren Aspekt kann die Polbuchse dazu ausgelegt sein, in ein Gehäuse des Energiespeichersystems, insbesondere in ein Deckelelement des Energiespeichersystems, eingegossen bzw. umspritzt zu werden. Somit kann eine einfache und sichere Positionierung der versetzten Polbuchse gewährleistet werden.

Gemäß einem weiteren Aspekt kann das Anschlusselement eine Ausnehmung aufweisen. Somit kann vorteilhafterweise Material eingespart werden, wodurch das Gewicht der Polbuchse um bis zu 25% verringert werden kann.

Gemäß einem weiteren Aspekt kann das Kontaktierungselement eine Durchgangsöffnung aufweisen. Dadurch kann vorteilhafterweise eine einfache und sichere elektrische Kontaktierung mit einem Polschaft bzw. Zellenverbinder hergestellt und gewährleistet werden.

Gemäß einem weiteren Aspekt kann die Durchgangsöffnung sich verjüngend ausgebildet sein, wodurch das Einführen des Polschafts bzw. Zellenverbinders vereinfacht werden kann, was die Montagezeit und -kosten vorteilhafterweise reduzieren kann.

Gemäß einem weiteren Aspekt kann die Durchgangsöffnung derart ausgebildet sein, dass die Durchgangsöffnung mindestens zwei Bereiche unterschiedlicher Neigung aufweist, oder die Durchgangsöffnung kann sich kontinuierlich verjüngend ausgebildet sein. Dies führt ferner zu einer verbesserten Montierfähigkeit und Reduktion der Montagezeit und -kosten.

Gemäß dem Gegenstand von Anspruch 19 wird die der Erfindung zugrundeliegende Aufgabe durch ein Energiespeichersystem mit mindestens einer vorstehend beschriebenen Polbuchse gelöst. Dabei weist das Energiespeichersystem ein Gehäuse und eine Vielzahl von Energiespeicherzellen auf, die in dem Gehäuse angeordnet sind. Die Polbuchse ist in einem Gehäuseteil, insbesondere in einem Deckelelement des Gehäuses, angeordnet und aufgenommen ist, und zwar derart, dass ein Innenraum des Gehäuses mittels der Polbuchse von einer äußeren Umgebung abgedichtet ist, und wobei die Polbuchse elektrisch mit der Vielzahl von Energiespeicherzellen verbunden ist und mit elektrischen Verbrauchern elektrisch verbindbar ist. Dadurch kann vorteilhafterweise ein Energiespeichersystem geschaffen werden, dessen Polbuchse den Innenraum des Energiespeichersystems vorteilhafterweise gut abdichtet und darüber hinaus eine verbesserte Widerstandsfähigkeit gegenüber von Zugbelastungen und gegen Herauslösen der Polbuchse aus dem Gehäuse bereitstellt. Aufgrund der asymmetrischen Umrissform der Polbuchse wird gleichzeitig eine Verdrehsicherung gewährleistet, was zu einer sicheren und einfachen Positionierung führt. Dies verringert vorteilhafterweise die Produktions- und Montagezeit sowie die damit verbundenen Kosten.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1A: eine perspektivische Darstellung einer ersten Ausführungsform der versetzten Polbuchse;
- FIG. 1B: eine schematische Darstellung der ersten Ausführungsform der Polbuchse in einer Vorderansicht;
- FIG. 1C: schematische Darstellung der ersten Ausführungsform der Polbuchse in einer Draufsicht;
- FIG. 1D: eine schematische Darstellung einer Schnittansicht der ersten Ausführungsform der Polbuchse;
- FIG. 2: eine schematische Darstellung einer Schnittansicht der in ein Gehäuse eines Energiespeichersystems eingesetzten versetzten Polbuchse;
- FIG. 3A: eine perspektivische Darstellung einer zweiten Ausführungsform einer Polbuchse;
- FIG. 3B: eine schematische Darstellung einer Vorderansicht der zweiten Ausführungsform der versetzten Polbuchse;
- FIG. 3C: eine schematische Darstellung einer Draufsicht der zweiten Ausführungsform der Polbuchse; und
- FIG. 3D: eine schematische Darstellung einer Schnittansicht der zweiten Ausführungsform der Polbuchse.

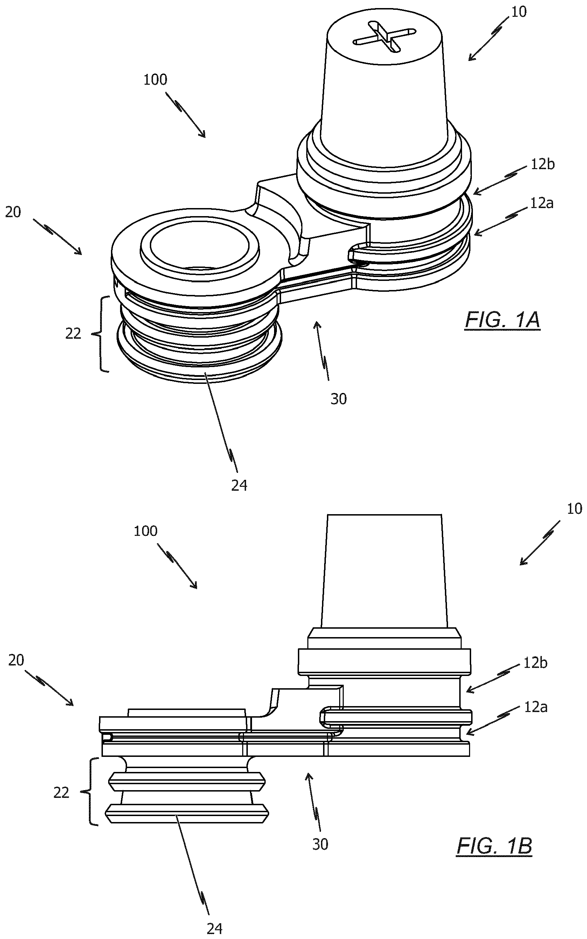

Nachfolgend werden Aspekte der erfindungsgemäßen versetzten Polbuchse unter Bezugnahme auf die Darstellungen in den FIGS. 1A bis 3D genauer beschrieben. Gleiche oder gleich wirkende Elemente und Funktionen sind mit denselben oder ähnlichen Bezugszeichen versehen.

Energiespeichersysteme, welche auf der Bleisäure-Technologie basieren, eignen sich insbesondere zum Einsatz als Starterbatterien in Fahrzeugen. Des Weiteren kann ein solches Energiespeichersystem ebenfalls überall dort eingesetzt werden, wo in einem kurzen Zeitraum relativ hohe Ströme benötigt werden.

Im Folgenden wird das Energiespeichersystem derart beschrieben, dass relative Begriffe auf den Einbau-Zustand des Energiespeichersystems bezogen sind. So bedeutet beispielsweise "in einem oberen Bereich" in einem im eingebauten Zustand gesehenen oberen Bereich, "in einem seitlichen Bereich" in einem im eingebauten Zustand und in Fahrtrichtung gesehenen Bereich, der sich in einem vorderen hinteren, linken oder rechten Bereich befindet, und "in einem unteren Bereich" in einem im eingebauten Zustand gesehenen unteren Bereich.

Energiespeichersysteme, welche mit einer versetzten Polbuchse gemäß der vorliegenden Erfindung ausgestattet sind, werden insbesondere in Fahrzeugen als Starterbatterien verwendet. Das Energiespeichersystem kann hierbei in einem in Fahrtrichtung gesehenen vorderen Bereich des Fahrzeugs, in einem hinteren Bereich des Fahrzeugs und/oder in einem Bereich unterhalb der Sitze, insbesondere unterhalb des Fahrersitzes, angeordnet sein.

Das Fahrzeug kann ein Luft- oder Wasserfahrzeug, ein spurgeführtes Fahrzeug, ein Geländefahrzeug oder bevorzugt ein Straßenfahrzeug sein, wobei unter Straßenfahrzeug ein Personenkraftwagen, ein Lastkraftwagen, ein Bus oder ein Wohnmobil verstanden werden kann.

Wenn das Energiespeichersystem in einem Lastkraftwagen verwendet wird, ist es auch denkbar, dass es an einer Stelle außerhalb der Führungskabine angeordnet ist, und insbesondere an einer Sattelplatte des Lastkraftwagens angebracht sein kann.

Das Energiespeichersystem kann dabei auf der Bleisäure-Technologie basieren. Es ist allerdings auch denkbar, dass das Energiespeichersystem auf anderen Technologien wie beispielsweise der NiMH-, Lithiumionen- oder Nickel-Cadmium-Technologie basiert.

Ein Energiespeichersystem gemäß der vorliegenden Erfindung weist dabei ein Gehäuse 200 und eine Vielzahl elektrochemischer Zellen auf, welche in dem Gehäuse angeordnet und aufgenommen sind. Das Gehäuse 200 kann dabei in ein Gehäuseunterteil und einen Deckel bzw. Deckelelement unterteilt sein, welche derart miteinander verbindbar sind, dass der Innenraum gegenüber einer äußeren Umgebung abgeschlossen und abgedichtet ist. Das Gehäuse 200 kann dabei insbesondere aus einem elektrisch isolierenden Kunststoffmaterial gefertigt sein. Dabei sind ein positives und ein negativer Terminal beispielsweise in Form von einer positiven und einer negativen Polbuchse 100 in dem Gehäuse 200 eingesetzt, insbesondere in dem Deckel des Gehäuses 200 eingesetzt. Die elektrochemischen Zellen weisen jeweils einen positiven Pol und einen negativen Pol auf. Die elektrochemischen Zellen werden mittels Zellenverbindern elektrisch miteinander verbunden. Zur elektrischen Verbindung zu (externen) elektrischen Verbrauchern ist der letzte positive bzw. negative Zellenverbinder als positiver bzw. negativer Polschaft ausgebildet bzw. ist mit einem positiven bzw. negativen Polschaft verbunden. Der positive bzw. negative Polschaft wird in eine nachfolgend näher beschriebene positive bzw. negative Polbuchse 100 eingeführt und mit dieser verbunden. Die Verbindung kann dabei insbesondere stoffschlüssig ausgebildet sein, beispielsweise durch Verschweißen. Dabei kann die positive bzw. negative Polbuchse das positive bzw. negative Terminal des Energiespeichersystems darstellen.

Erfindungsgemäß handelt es sich bei der Polbuchse 100 um eine versetzte Polbuchse 100. Unter einer versetzten Polbuchse wird in diesem Zusammenhang eine Polbuchse verstanden, bei der die Stromeinleitung in einem Bereich erfolgt, der von einem Bereich, in dem die Stromableitung erfolgt, in mindestens einer Richtung versetzt angeordnet ist.

Die erfindungsgemäße versetzte Polbuchse 100 hat dabei den Vorteil, dass der Bereich, wo der Polschaft mit der Polbuchse verbunden werden soll, frei liegt und gut für ein Werkzeug (beispielsweise ein Schweißwerkzeug) zugänglich ist. Dies vereinfacht vorteilhafterweise die Montage des Energiespeichersystems.

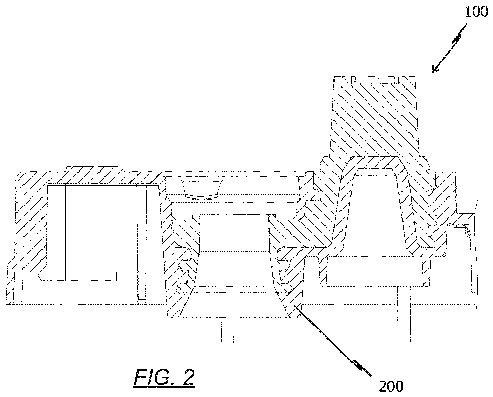

FIGS. 1A bis 1D zeigen eine erste Ausführungsform der versetzten Polbuchse 100 im nicht eingesetzten Zustand. FIG. 2 zeigt die versetzte Polbuchse 100 gemäß der ersten Ausführungsform in einem im Gehäuse 200 eingesetzten Zustand.

FIG. 1A zeigt eine perspektivische Darstellung der erfindungsgemäßen versetzten Polbuchse 100. Wie in FIG. 1A gezeigt wird, weist die versetzte Polbuchse ein Kontaktierungselement 20 und ein mit dem Kontaktierungselement 20 mittels eines Verbindungselements 30 verbundenes Anschlusselement 10 auf.

Dabei erstreckt sich das Anschlusselement 10, welches an einer Seite (einem ersten Endbereich) des Verbindungselements 30 angebracht ist von diesem in FIG. 1A gesehener Richtung nach oben und das Kontaktierungselement 20 das an der anderen Seite (einem zweiten Endbereich) des Verbindungselements 30 angeordnet ist erstreckt sich parallel zu dem Anschlusselement 10 in die entgegengesetzte Richtung, nämlich in FIG. 1A gesehen nach unten von dem Verbindungselement 30.

Das Anschlusselement 10, das Verbindungselement und das Kontaktierungselement 20 können insbesondere integral ausgebildet sein. Diese könnten in anderen Ausführungsformen aber auch stoffschlüssig miteinander verbunden sein.

Das Anschlusselement 10 gemäß der ersten Ausführungsform kann einteilig ausgebildet sein und zumindest im Wesentlichen die Form eines Konus aufweisen. Alternativ ist es auch eine andere Geometrie des Anschlusselements 10 denkbar, beispielsweise die Form eines Zylinders oder Pyramidenstumpfes.

Das in FIG. 1A an der Oberseite des Anschlusselements 10 dargestellte Pluszeichen ist nur exemplarisch dargestellt, um dem Anwender auf einfache und schnelle Art und Weise die Polarität der Polbuchse und damit des Terminals anzudeuten. Es ist natürlich selbstverständlich auch denkbar, die in FIG. 1A dargestellte Polbuchse 100 für das negative Terminal zu verwenden. Dann wäre anstelle des Pluszeichens entsprechend ein Minuszeichen vorhanden. Alternativ könnte auf die Plus- bzw. Minuszeichen auch gänzlich verzichtet werden oder eine alternative Darstellung gewählt werden.

FIG. 1B zeigt eine Vorderansicht der Polbuchse 100 gemäß FIG. 1A. Darin ist ersichtlich, dass das Kontaktierungselement 20 sowohl horizontal (d. h. senkrecht zu der Erstreckungsrichtung das Kontaktierungselement 20) als auch vertikal (d. h. entlang bzw. parallel zu der Erstreckungsrichtung des Kontaktierungselements 20) versetzt angeordnet ist.

Aus FIG. 1B wird deutlich, dass ein unteres Ende des Anschlussteils 10 zumindest im Wesentlichen bündig mit einer Unterseite des Verbindungselements 30 abschließt und sich das Anschlussteil 10 nach oben hin über eine Oberseite des Verbindungselements 30 hinaus erstreckt.

Das Kontaktierungselement 20 erstreckt sich von einem oberen Ende, das zumindest im Wesentlichen bündig mit der Oberseite des Verbindungselements 30 abschließt nach unten (d. h. in die entgegengesetzte Richtung wie das Anschlusselement 10) über die Unterseite des Verbindungselements 30 hinaus.

Das Verbindungselement 30 kann dabei stufenförmig ausgebildet sein, derart, dass es mindestens eine Stufe aufweist. Insbesondere kann die Stufe derart ausgebildet sein, dass die erste Seite bzw. der erste Endbereich des Verbindungselements 30, welcher an das Anschlusselement 10 angrenzt, eine größere Dicke aufweist als die zweite Seite bzw. der zweite Endbereich, welcher an das Kontaktierungselement 20 angrenzt.

Dadurch kann vorteilhafterweise gewährleistet werden, dass die versetzte Polbuchse auch dann nicht versagt, wenn hohe Ströme in kurzer Zeit geleitet werden müssen, was zu einer Temperaturerhöhung der Polbuchse 100 führen kann. Durch Bereitstellen einer Materialanhäufung (d. h., der Stufe), kann somit gewährleistet werden, dass trotz Temperaturerhöhung die Verbindung zwischen dem Kontaktierungselement 20 und dem Anschlusselement 10 dauerhaft gewährleistet und sichergestellt werden kann.

Auch wirkt sich das Ausbilden einer derartigen Stufe des Verbindungselements 30 vorteilhaft auf den Abkühlvorgang des Materials des Gehäuses 200, insbesondere des Deckels des Gehäuses 200, während die versetzte Polbuchse 100 in das Gehäuse eingesetzt bzw. mit diesem umspritzt wird, aus. Mit anderen Worten, beim Einsetzen der versetzten Polbuchse 100 kann diese beispielsweise mittels eines Spritzguss- oder Spritzpressverfahrens mit dem Material des Gehäuses 200, insbesondere mit dem Material des Deckels des Gehäuses 200, umspritzt werden. Dabei bewirkt die Stufe, welche in dem Verbindungselement 30 angrenzend an das Anschlusselement 10 angeordnet ist, dass das Material des Gehäuses 200 schneller und homogener abkühlt, da eine Materialanhäufung des Gehäuses 200 (zumindest in diesem Bereich) vermieden werden kann. Somit kann vorteilhafterweise verhindert werden, dass sich beim Abkühlen ein Spalt zwischen dem Material des Gehäuses 200 und der Oberfläche der versetzten Polbuchse 100, und insbesondere zwischen dem Material des Gehäuses 200 und der Oberfläche des Verbindungselements 30, bildet, welcher sich nachteilig auf die Qualität der Verbindung auswirkt.

FIG. 1B zeigt ferner, dass das Kontaktierungselement 20 einen Labyrinthbereich 22 aufweist. Der Labyrinthbereich 22 dient dazu, dass Gase und/oder Flüssigkeiten nicht in das bzw. aus dem Gehäuse 200 des Energiespeichersystems entweichen können. Zu diesem Zweck weist der Labyrinthbereich 22 mindestens einen (umlaufenden) Vorsprung 24 auf, welcher mindestens einen Hinterschnitt aufweist, und zwar derart, dass eine verbesserte Dichtungseigenschaft sichergestellt wird.

Dabei kann auf zusätzliche umweltschädliche Beschichtungen zum Abdichten verzichtet werden, was darüber hinaus die Montage und den Zusammenbau des Energiespeichersystems vereinfacht.

In dem in FIG. 1B dargestellten Fall, weist das Kontaktierungselement 20 zwei vollständig umlaufende Vorsprünge 24 in dem Labyrinthbereich 22 auf, welche beabstandet voneinander angeordnet sind, und welche jeweils zwei Hinterschnitte aufweisen.

Wie in FIGS. 1A und 1B dargestellt ist, kann das Anschlussteil 10 mindestens eine Nut 12a, 12b in einem unteren Bereich des Anschlussteils 10 aufweisen. Dadurch kann zum einen eine Gewicht-Optimierung gewährleistet werden und zum anderen kann dadurch vorteilhafterweise eine Sicherung bei Zugbelastung sichergestellt werden. Ferner führt die mindestens eine Nut 12a, 12b dazu, dass die Biegesteifigkeit der versetzten Polbuchse 100 verbessert wird.

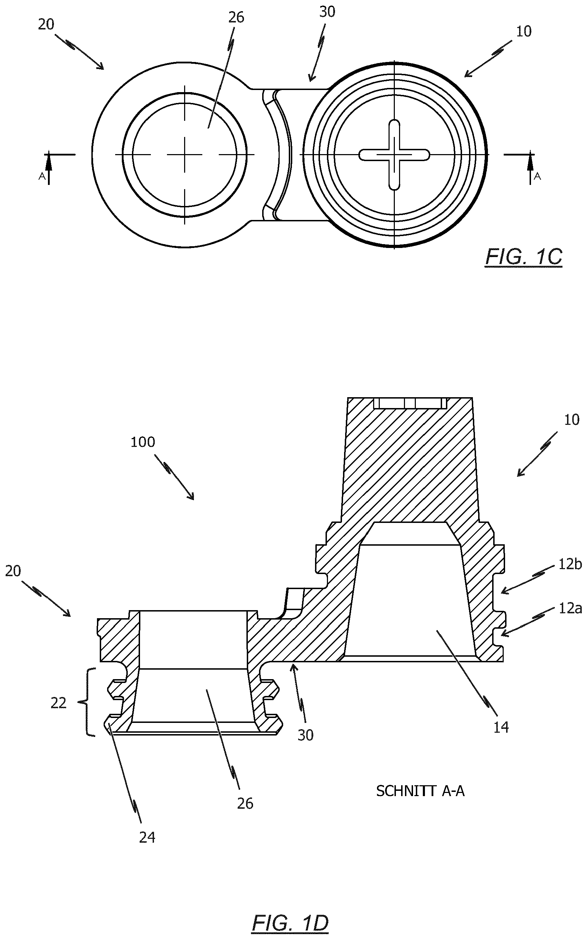

FIG. 1C zeigt die erfindungsgemäße Polbuchse 100 in einer Draufsicht von oben. Darin ist erkennbar, dass der Umriss der versetzten Polbuchse 100 zumindest im Wesentlichen die Form eines Knochens/einer Hantel aufweist. Mit anderen Worten, die versetzte Polbuchse 100 weist eine Taillierung auf, und zwar derart, dass das Verbindungselement 30 eine Breite aufweist, die geringer ist als der Durchmesser des Anschlusselements 10 und/oder der Durchmesser des Anschlusselements 20.

Ferner kann durch die nicht rotationssymmetrische Form der versetzten Polbuchse 100 vorteilhafterweise automatische eine Verdrehsicherung sichergestellt werden.

In der in FIG. 1C dargestellten Ausführungsform sind die Seiten des Verbindungselements 30 gerade und parallel zueinander ausgebildet.

Genauso gut ist es allerdings auch denkbar, dass mindestens eine der zwei Seiten oder beide gebogen oder sich zu dem Anschlusselement 10 hin oder zu dem Kontaktierungselement 20 hin verjüngend ausgebildet ist.

Beispielsweise kann die (dünnste) Breite des Verbindungselements 30 größer sein als der zumindest der kleinste Durchmesser einer Durchgangsöffnung 26 des Kontaktierungselements 20. Somit kann sichergestellt werden, dass das Verbindungselement 30 auch beim Leiten von hohen Strömen nicht kaputtgeht.

Die taillierte Form der Polbuchse 100 bewirkt im Vergleich zu konventionellen versetzten Polbuchsen, bei denen der Umriss der versetzten Polbuchse im Wesentlichen der Form her einer Langlochkontur entspricht, dazu, dass zum einen Material (d. h., Blei) eingespart werden kann, und zum anderen verlängert sich die abgewickelte bzw. abgerollte Länge der umlaufenden Nut 12a im Vergleich zu der abgewickelten bzw. abgerollten Länge der Nut in einer herkömmlichen versetzten Polbuchse, was mit einer verbesserten Biegesteifigkeit und mit einem erhöhten Widerstand gegenüber von Zugbelastungen einhergeht.

Aufgrund der Anordnung der umlaufenden Nuten 12a, 12b, kann verhindert werden, dass bei einer Zugbelastung im Anschlussbereich des Anschlusselements 10 das Herauslösen aus dem Gehäuse 200 (insbesondere dem Deckel des Gehäuses 200) des Energiespeichersystems verhindert werden kann. Genauer gesagt, sowohl die zumindest im Wesentlichen vollständig um das Anschlusselement 10, das Verbindungselement 30 und das Kontaktierungselement 20 umlaufende Nut 12a als auch die nur um das Anschlusselement 10 umlaufende Nut 12b verhindern das Herauslösen der versetzten Polbuchse 100 und sorgen so für eine Sicherung der Polbuchse 100 in dem Gehäuse 200 des Energiespeichersystems bei Zugbelastung.

Ferner ist in FIG. 1C erkennbar, dass in dem Kontaktierungselement 20 eine Durchgangsöffnung 26 ausgebildet ist, durch welche ein Polschaft oder ein Zellenverbinderelement bzw. Zellenverbinder, welcher den gesammelten Strom aus den Energiespeicherzellen zu der Polbuchse 100 abführt, durchgeführt bzw. eingeführt wird. Das Kontaktierungselement 20 ist dabei dazu ausgebildet, mit dem Polschaft bzw. dem Zellenverbinder stoffschlüssig verbunden, insbesondere verschweißt, zu werden.

FIG. 1D zeigt die versetzte Polbuchse 100 in einer Schnittdarstellung. Dabei ist ersichtlich, dass das Anschlusselement 10, in einem unteren Bereich eine Ausnehmung 14 aufweist. Dadurch können vorteilhafterweise Material und damit Gewicht und Kosten eingespart werden. Insbesondere kann Material (d.h. Blei) um ca. bis zu 25% reduziert werden.

Die Ausnehmung 14 kann beispielsweise zumindest im Wesentlichen die Form eines kegel(stumpf)förmigen Sackloches aufweisen. Es ist allerdings genauso gut denkbar, dass andere Formen beispielsweise eine Zylinderform, Pyramiden(stumpf)form oder Ausnehmungen 14 mit anderen geometrischen Grundflächen ebenso möglich sind. Es ist auch denkbar, eine oder mehrere zusätzliche Rillen entlang der Wandfläche der Ausnehmung 14 anzuordnen, welche geradlinig oder spiralförmig in Erstreckungsrichtung der Ausnehmung 14 verlaufen. Dadurch kann eine verbesserte Verbindung mit dem Gehäuse 200, insbesondere Deckel des Gehäuses 200, im eingesetzten Zustand erzielt werden. Beispielsweise können derartige Rillen eine Form aufweisen, die komplementär zu einer Evolventenverzahnung ausgebildet ist. Mit anderen Worten, die Grundfläche der Ausnehmung 14 kann beispielsweise zumindest im Wesentlichen der Form eines Zahnrads entsprechen.

Ferner ist erkennbar, dass der mindestens eine umlaufende Vorsprung 24 (in FIG. 1D: zwei umlaufende Vorsprünge 24) des Kontaktierungselements zumindest im Wesentlichen symmetrisch ausgebildet ist. Insbesondere ist der Querschnitt des umlaufenden Vorsprungs 24 wie in FIG. 1D dargestellt pfeilförmig. Alternativ könnte der Querschnitt des umlaufenden Vorsprungs 24 auch T-förmig ausgebildet sein.

Auch wenn dies nicht explizit in den Figuren dargestellt ist, ist es allerdings genauso gut denkbar, dass der umlaufende Vorsprung 24 oder mehrere umlaufende Vorsprünge oder alle umlaufende Vorsprünge 24 asymmetrisch ausgebildet sind und beispielsweise nur einen Hinterschnitt ausbilden. Insbesondere könnte der Querschnitt von mindestens einem umlaufenden Vorsprung 24 C-förmig und/oder L-förmig sein.

Auch wenn dies in den Figuren nicht dargestellt ist, ist es denkbar, mindestens einen Vorsprung 24 vollständig umlaufend auszubilden und einen Vorsprung, insbesondere einen näher in Richtung des Innenraums des Gehäuses 200 des Energiespeichersystems liegenden Vorsprung, intermittierend (d.h. unterbrochen) und/oder spiralförmig auszubilden.

FIG. 2 stellt eine schematische Darstellung der in einem Teil des Gehäuses 200 des Energiespeichersystems aufgenommenen und angeordneten Polbuchse 100 dar. Wie in FIG. 2 dargestellt wird die versetze Polbuchse 100 von einem Material des Gehäuses 200 und insbesondere eines Deckels bzw. Deckelelements des Gehäuses 200 des Energiespeichersystems aufgenommen und umgeben.

Insbesondere kann das Kontaktierungselement 20 (sowie das Verbindungselement 30) zumindest im Wesentlichen vollständig in das Gehäuse 200 bzw. das Deckelelement eingesetzt sein, während dagegen nur ein unterer Bereich des Anschlusselements 10 von Material des Gehäuses 200 bzw. des Deckelelements des Gehäuses 200 umgeben ist.

Insbesondere die zumindest das Anschlusselement 10 umlaufenden Nuten 12a, 12b sind mit einem Material des Gehäuses 200 bzw. des Deckelelements des Gehäuses 200 ausgefüllt bzw. von diesem umgeben. Dadurch kann verhindert werden, dass sich die versetzte Polbuchse 100 bei einer Zugbelastung aus dem Gehäuse 200 bzw. dem Deckelelement des Gehäuses 200 löst. Insbesondere die Nut 12a, welche zumindest um das Anschlusselement 10, und insbesondere zumindest im Wesentlichen vollständig um das Anschlusselement 10, das Verbindungselement 30 und das Kontaktierungselement 20, umlaufend verläuft, dient als Sicherung der Polbuchse 100 bei Zugbelastung.

Da die versetzte Polbuchse 100 gemäß der vorliegenden Erfindung derart tailliert ist, dass eine Breite des Verbindungselements 30 kleiner ist als ein Durchmesser des Anschlusselements 10 und/oder kleiner ist als ein Durchmesser des Kontaktierungselements 20 ist die Sicherheit gegenüber einer (externen) Zugbelastung erhöht verglichen mit dem herkömmlichen Fall, bei dem die Breite des Verbindungselements zumindest im Wesentlichen den Durchmessern des Kontaktierungselements und des Anschlusselements entspricht.

Mit anderen Worten, durch Verlängern der abgewickelten Nutlänge wird der Biegewiderstand sowie der Widerstand der versetzten Polbuchse 100 gegen Zugbelastungen verbessert.

Dabei ist zu beachten, dass im eingesetzten Zustand der versetzten Polbuchse 100 in dem Gehäuse 200 des Energiespeichersystems zumindest im Wesentlichen alle Nuten 12a, 12b sowie Vorsprünge 24 mit Material des Gehäuses 200 umgeben sind. Dies kann beispielsweise mittels eines Spritzgieß oder Spritzpress-Verfahren einfach und kostengünstig erzielt werden.

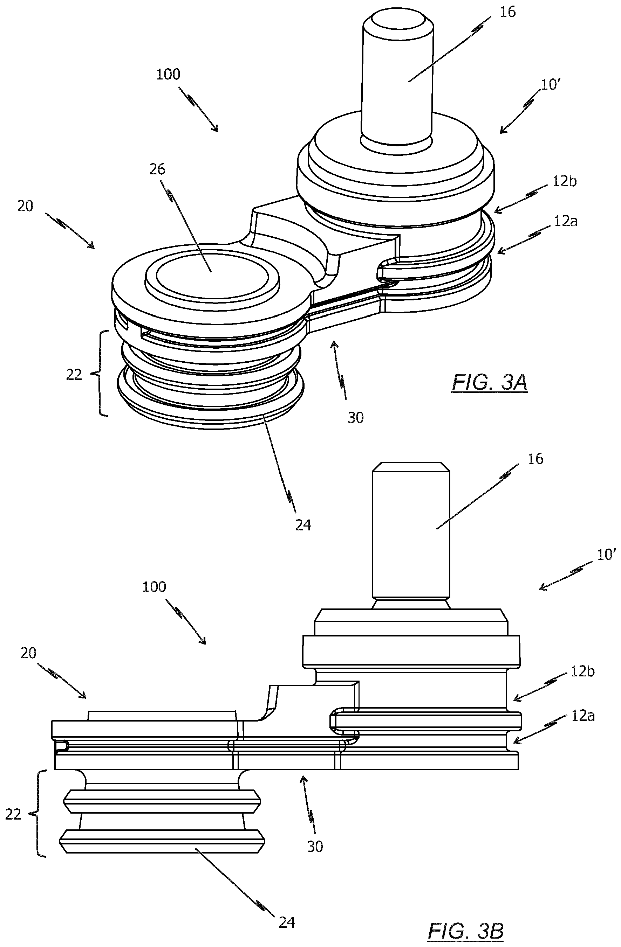

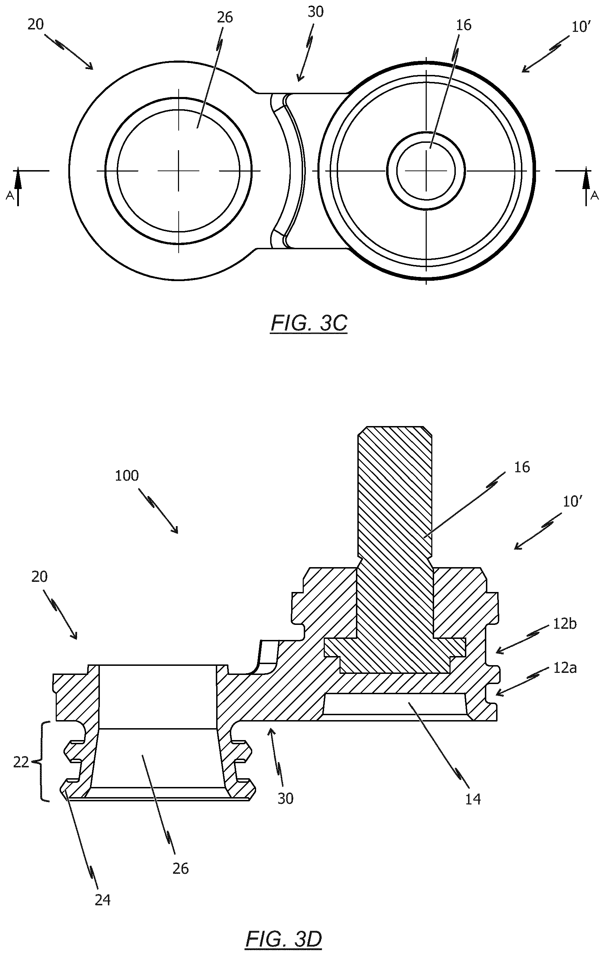

FIG. 3A bis 3D zeigen eine weitere Ausführungsform der erfindungsgemäßen versetzten Polbuchse 100. Im Folgenden wird nur auf die Unterschiede zu der vorstehend beschriebenen Polbuchse 100 gemäß der ersten Ausführungsform eingegangen, wobei auf eine wiederholte Beschreibung gleicher oder gleichwirkender Elemente verzichtet wird.

FIG. 3A zeigt eine versetzte Polbuchse 100 einer zweiten Ausführungsform, welche zumindest im Wesentlichen einen ähnlichen Aufbau aufweist wie die Polbuchse 100 gemäß der ersten Ausführungsform. Mit anderen Worten, die Polbuchse 100 gemäß der zweiten Ausführungsform weist ein Kontaktierungselement 20 und Verbindungselement 30 auf, welche im Wesentlichen dem Kontaktierungselement 20 und dem Verbindungselement 30 der ersten Ausführungsform entsprechen und auf deren genauere Beschreibung verzichtet wird, um Wiederholungen zu vermeiden.

Im Vergleich zu der ersten Ausführungsform bei dem das Anschlusselement 10 einteilig ausgebildet ist, ist das Anschlusselement 10' der zweiten Ausführungsform mindestens zweiteilig ausgeführt. Dabei ist die Orientierung und insbesondere die Erstreckungsrichtung ähnlich wie in der ersten Ausführungsform.

Die versetze Polbuchse 100 gemäß der zweiten Ausführungsform weist zumindest einen Gewindeeinsatz 16 auf zum elektrischen Kontaktieren von elektrischen Verbrauchern auf, welcher in einem unteren Bereich des Anschlusselements 10' eingesetzt und vorzugsweise umgossen ist.

Aufgrund der zweiteiligen Ausführungsform des Anschlusselements 10' verändert sich die Form des Anschlusselements 10' entsprechend. Genauer gesagt, die Ausnehmung 14 ist weniger tief ausgebildet als in der vorherstehend beschriebenen ersten Ausführungsform.

Auch bei der weiteren Ausführungsform können das Kontaktierungselement 20, das Verbindungselement 30 und das Anschlusselement 10' (insbesondere der den Gewindeeinsatz 16 aufnehmende Teil des Anschlusselements 10') integral ausgebildet sein. Genauso gut ist es allerdings auch denkbar, dass diese Elemente stoffschlüssig miteinander verbunden werden.

Kurz zusammengefasst werden gemäß dieser Anmeldung versetzte Polbuchsen 100 bereitgestellt und angegeben, welche gewichtsoptimiert und stabiler als herkömmliche versetze Polbuchsen sind. Insbesondere kann eine Gewichtseinsparung von bis zu 25 % im Vergleich zu konventionellen versetzen Polbuchsen erzielt werden, wobei gleichzeitig eine verbesserte Sicherung gegenüber Zugbelastungen und/oder verbesserte Dichtungseigenschaften erzielt werden können.

Auch wenn in den Figuren nur versetzte Polbuchsen 100 dargestellt sind, welche sowohl den vorstehend beschriebenen Labyrinthbereich 22 im Kontaktierungselement 20 aufweisen, als auch die vorstehend beschriebenen Nuten 12a, 12b, ist es genauso gut denkbar, dass eine versetzte Polbuchse 100 nur die Nuten 12a, 12b (und die Taillierung im Bereich des Verbindungselements 30) aufweist oder den oben beschriebenen Labyrinthbereich 22.

An dieser Stelle sei darauf hingewiesen, dass alle oben beschriebenen Teile für sich alleine gesehen oder in jedweder Kombination, insbesondere die in den Zeichnungen dargestellten Details, als erfindungswesentlich beansprucht werden. Abänderungen hiervon sind dem Fachmann geläufig.

### Bezugszeichenliste

- 100: versetzte Polbuchse
- 10, 10': Anschlusselement
- 12a, 12b: Nut
- 14: Ausnehmung
- 16: Gewindeeinsatz
- 20: Kontaktierungselement
- 22: Labyrinthbereich
- 24: Vorsprung
- 26: Durchgangsöffnung
- 30: Verbindungselement
- 200: Gehäuse des Energiespeichersystems

## Patentansprüche

1. Polbuchse (100) für ein Energiespeichersystem, insbesondere für ein Bleisäure-Energiespeichersystem, wobei die Polbuchse (100) Folgendes aufweist:
- ein Verbindungselement (30) mit einem ersten Endbereich und einem dem ersten Endbereich zumindest im Wesentlichen gegenüberliegenden zweiten Endbereich;
- ein Anschlusselement (10, 10'), das an dem ersten Endbereich des Verbindungselements (30) angeordnet ist, und das dazu ausgelegt ist, elektrische Verbraucher elektrisch zu kontaktieren; und
- ein Kontaktierungselement (20), das an dem zweiten Endbereich des Verbindungselements (30) angeordnet ist, und das dazu ausgelegt ist, einen Polschaft elektrisch zu kontaktieren,
wobei sich das Anschlusselement (10, 10') in eine erste Erstreckungsrichtung von dem Verbindungselement (30) aus erstreckt, und wobei sich das Kontaktierungselement (20) in eine zweite Erstreckungsrichtung von dem Verbindungselement (30) erstreckt, wobei die zweite Erstreckungsrichtung parallel und in entgegengesetzter Richtung zu der ersten Erstreckungsrichtung verläuft, derart, dass das Kontaktierungselement (20) versetzt von dem Anschlusselement (10, 10') angeordnet ist,
wobei das Anschlusselement (10, 10') einen oberen Bereich zum Kontaktieren der elektrischen Verbraucher und einen unteren Bereich aufweist, der dazu ausgelegt ist, mit einem Material eines Gehäuses (200) in Eingriff zu kommen, **dadurch gekennzeichnet, dass** in dem unteren Bereich mindestens eine Nut (12a, 12b) angeordnet ist,
wobei die mindestens eine Nut (12a, 12b) eine Nut (12a) aufweist, die zumindest im Wesentlichen vollständig umlaufend um das Anschlusselement (10), das Verbindungselement (30) und das Kontaktierungselement (20) ausgebildet ist.

2. Polbuchse (100) nach Anspruch 1,
wobei der untere Bereich des Anschlusselements (10, 10') eine zusätzliche Nut (12a, 12b) aufweist, welche umlaufend um zumindest das Anschlusselement (10, 10') ausgebildet ist.

3. Polbuchse (100) nach Anspruch 1 oder 2,
wobei das Kontaktierungselement (20) einen Labyrinthbereich (22) aufweist, in welchem mindestens ein Vorsprung (24) mit mindestens einem Hinterschnitt ausgebildet ist.

4. Polbuchse (100) nach Anspruch 3,
wobei mindestens ein Vorsprung (24) vollständig umlaufend ausgebildet ist, und/oder
wobei mindestens ein Vorsprung (24) intermittierend und/oder spiralförmig umlaufend ausgebildet ist.

5. Polbuchse (100) nach Anspruch 3 oder 4,
wobei mindestens ein Vorsprung (24) einen symmetrischen Querschnitt aufweist, der insbesondere zumindest im Wesentlichen pfeilförmig oder T-förmig ausgebildet ist, oder
wobei mindestens ein Vorsprung (24) einen asymmetrischen Querschnitt aufweist, der insbesondere L-förmig oder C-förmig ausgebildet ist.

6. Polbuchse (100) nach einem der Ansprüche 1 bis 5,
wobei die Polbuchse (100) eine Taillierung aufweist, und zwar derart, dass eine Breite des Verbindungselements (30) kleiner ist als der Durchmesser des Anschlusselements (10, 10') und/oder kleiner ist als der Durchmesser des Kontaktierungselements (20).

7. Polbuchse (100) nach einem der Ansprüche 1 bis 6,
wobei mindestens eine Seite des Verbindungselements (30) geradlinig ausgebildet ist, und/oder wobei mindestens eine Seite des Verbindungselements (30) gebogen ausgebildet ist.

8. Polbuchse (100) nach einem der Ansprüche 1 bis 7,
wobei das Anschlusselement (10) einteilig, und insbesondere als Konus, ausgebildet ist.

9. Polbuchse (100) nach einem der Ansprüche 1 bis 7,
wobei das Anschlusselement (10') mindestens zweiteilig ausgebildet ist,
wobei zumindest ein Gewindeeinsatz (16) von einem Bereich des Anschlusselements (10') umgossen ist.

10. Polbuchse (100) nach einem der Ansprüche 1 bis 9,
wobei das Anschlusselement (10, 10'), das Verbindungselement (30) und das Kontaktierungselement (20) integral ausgebildet sind.

11. Polbuchse (100) nach einem der Ansprüche 1 bis 10,
wobei die Polbuchse (100) dazu ausgelegt ist, in ein Gehäuse (200) des Energiespeichersystems, insbesondere in ein Deckelelement des Energiespeichersystems, eingegossen bzw. umspritzt zu werden.

12. Polbuchse (100) nach einem der Ansprüche 1 bis 11,
wobei das Anschlusselement (10, 10') eine Ausnehmung (14) aufweist.

13. Polbuchse (100) nach einem der Ansprüche 1 bis 12,
wobei das Kontaktierungselement (20) eine Durchgangsöffnung (26) aufweist.

14. Polbuchse (100) nach Anspruch 13,
wobei die Durchgangsöffnung (26) sich verjüngend ausgebildet ist, und/oder
wobei die Durchgangsöffnung (26) derart ausgebildet ist, dass die Durchgangsöffnung (26) mindestens zwei Bereiche unterschiedlicher Neigung aufweist, oder wobei die Durchgangsöffnung sich kontinuierlich verjüngend ausgebildet ist.

15. Energiespeichersystem mit mindestens einer Polbuchse (100) gemäß einem der vorhergehenden Ansprüche,
wobei das Energiespeichersystem ein Gehäuse (200) und eine Vielzahl von Energiespeicherzellen aufweist, die in dem Gehäuse (200) angeordnet sind, wobei die Polbuchse (100) in einem Gehäuseteil, insbesondere in einem Deckelelement des Gehäuses (200), angeordnet und aufgenommen ist, derart, dass ein Innenraum des Gehäuses (200) mittels der Polbuchse (100) von einer äußeren Umgebung abgedichtet ist, und wobei die Polbuchse (100) elektrisch mit der Vielzahl von Energiespeicherzellen verbunden ist und mit elektrischen Verbrauchern elektrisch verbindbar ist.

## Claims

1. Pole socket (100) for an energy-storage system, in particular for a lead-acid energy-storage system, wherein the pole socket (100) has the following:
- a connecting element (30) with a first end region and with a second end region situated at least substantially opposite the first end region;
- a connection element (10, 10') which is arranged on the first end region of the connecting element (30) and which is configured to make electrical contact with electrical consumers; and
- a contacting element (20) which is arranged on the second end region of the connecting element (30) and which is configured to make electrical contact with a pole shaft,
wherein the connection element (10, 10') extends in a first direction of extent from the connecting element (30), and wherein the contacting element (20) extends in a second direction of extent from the connecting element (30), wherein the second direction of extent extends parallel and in the opposite direction with respect to the first direction of extent, such that the contacting element (20) is arranged offset from the connection element (10, 10'),
wherein the connection element (10, 10') has an upper region for making contact with the electrical consumers and has a lower region which is configured to engage with a material of a housing (200), **characterized in that** at least one groove (12a, 12b) is arranged in the lower region, wherein the at least one groove (12a, 12b) comprises a groove (12a) which is of at least substantially fully encircling form around the connection element (10), the connecting element (30) and the contacting element (20).

2. Pole socket (100) according to Claim 1,
wherein the lower region of the connection element (10, 10') has an additional groove (12a, 12b) which is of encircling form around at least the connection element (10, 10').

3. Pole socket (100) according to Claim 1 or 2,
wherein the contacting element (20) has a labyrinth region (22) in which at least one projection (24) with at least one undercut is formed.

4. Pole socket (100) according to Claim 3,
wherein at least one projection (24) is of fully encircling form, and/or
wherein at least one projection (24) is of intermittent and/or spiral-shaped encircling form.

5. Pole socket (100) according to Claim 3 or 4,
wherein at least one projection (24) has a symmetrical cross section, which is in particular of at least substantially arrow-shaped or T-shaped form, or
wherein at least one projection (24) has an asymmetrical cross section, which is in particular of L-shaped or C-shaped form.

6. Pole socket (100) according to one of Claims 1 to 5,
wherein the pole socket (100) has a waisted configuration, specifically such that a width of the connecting element (30) is smaller than the diameter of the connection element (10, 10') and/or smaller than the diameter of the contacting element (20).

7. Pole socket (100) according to one of Claims 1 to 6,
wherein at least one side of the connecting element (30) is of rectilinear form, and/or wherein at least one side of the connecting element (30) is of curved form.

8. Pole socket (100) according to one of Claims 1 to 7,
wherein the connection element (10) is of one-part form, and in particular in the form of a cone.

9. Pole socket (100) according to one of Claims 1 to 7,
wherein the connection element (10') is of at least two-part form, wherein at least one threaded insert (16) is encapsulated by a region of the connection element (10').

10. Pole socket (100) according to one of Claims 1 to 9,
wherein the connection element (10, 10'), the connecting element (30) and the contacting element (20) are of integral form.

11. Pole socket (100) according to one of Claims 1 to 10,
wherein the pole socket (100) is configured to be cast into or overmoulded with a housing (200) of the energy-storage system, in particular cast into or overmoulded with a cover element of the energy-storage system.

12. Pole socket (100) according to one of Claims 1 to 11,
wherein the connection element (10, 10') has a recess (14).

13. Pole socket (100) according to one of Claims 1 to 12,
wherein the contacting element (20) has a through-opening (26).

14. Pole socket (100) according to Claim 13,
wherein the through-opening (26) is of tapering form, and/or
wherein the through-opening (26) is formed such that the through-opening (26) has at least two regions of different inclination, or wherein the through-opening is of continuously tapering form.

15. Energy-storage system having at least one pole socket (100) according to one of the preceding claims,
wherein the energy-storage system has a housing (200) and a multiplicity of energy-storage cells that are arranged in the housing (200),
wherein the pole socket (100) is arranged and received in a housing part, in particular in a cover element of the housing (200), such that an interior space of the housing (200) is sealed off from an external environment by means of the pole socket (100), and wherein the pole socket (100) is electrically connected to the multiplicity of energy-storage cells and is electrically connectable to electrical consumers.

## Revendications

1. Douille polaire (100) destinée à un système de stockage d'énergie, en particulier à un système de stockage d'énergie au plomb, la douille polaire (100) comportant les éléments suivants :
- un élément de liaison (30) pourvu d'une première zone d'extrémité et d'une deuxième zone d'extrémité au moins sensiblement opposée à la première zone d'extrémité ;
- un élément de raccordement (10, 10') qui est disposé au niveau de la première zone d'extrémité de l'élément de liaison (30) et qui est conçu pour venir en contact électrique avec des consommateurs électriques ; et
- un élément de contact (20) qui est disposé au niveau de la deuxième zone d'extrémité de l'élément de liaison (30) et qui est conçu pour venir en contact électrique avec un arbre polaire,
l'élément de raccordement (10, 10') s'étendant dans un premier sens d'extension depuis l'élément de liaison (30), et l'élément de contact (20) s'étendant dans un deuxième sens d'extension depuis l'élément de liaison (30), le deuxième sens d'extension s'étendant parallèlement au premier sens d'extension et dans le sens opposé à celui-ci de telle sorte que l'élément de contact (20) soit disposé de manière décalée par rapport à l'élément de raccordement (10, 10'),
l'élément de raccordement (10, 10') comportant une zone supérieure destinée à venir en contact avec les consommateurs électriques et une zone inférieure qui est conçue pour venir s'engager avec un matériau d'un boîtier (200), **caractérisée en ce que**
au moins une rainure (12a, 12b) est ménagée dans la zone inférieure,
l'au moins une rainure (12a, 12b) incluant une rainure (12a) qui est formée de manière à s'étendre au moins sensiblement sur toute la circonférence autour de l'élément de raccordement (10), de l'élément de liaison (30) et de l'élément de contact (20).

2. Douille polaire (100) selon la revendication 1,
la zone inférieure de l'élément de raccordement (10, 10') comportant une rainure supplémentaire (12a, 12b) qui est formée de manière à s'étendre sur la circonférence autour d'au moins l'élément de raccordement (10, 10').

3. Douille polaire (100) selon la revendication 1 ou 2,
l'élément de contact (20) comportant une zone labyrinthique (22) dans laquelle au moins une saillie (24) est formée avec au moins une contre-dépouille.

4. Douille polaire (100) selon la revendication 3,
au moins une saillie (24) étant conçue de manière à s'étendre sur toute la circonférence, et/ou
au moins une saillie (24) étant conçue de manière à s'étendre sur la circonférence en spirale et/ou par intermittence.

5. Douille polaire (100) selon la revendication 3 ou 4,
au moins une saillie (24) présentant une section transversale symétrique qui est en particulier au moins sensiblement en forme de flèche ou en forme de T, ou
au moins une saillie (24) présentant une section transversale asymétrique, qui est en particulier en forme de L ou de C.

6. Douille polaire (100) selon l'une des revendications 1 à 5,
la douille polaire (100) présentant un cintrage, c'est-à-dire qu'une largeur de l'élément de liaison (30) est inférieure au diamètre de l'élément de raccordement (10, 10') et/ou est inférieure au diamètre de l'élément de contact (20).

7. Douille polaire (100) selon l'une des revendications 1 à 6,
au moins un côté de l'élément de liaison (30) étant rectiligne, et/ou au moins un côté de l'élément de liaison (30) étant incurvé.

8. Douille polaire (100) selon l'une des revendications 1 à 7,
l'élément de raccordement (10) étant conçu d'une seule pièce, en particulier sous la forme d'un cône.

9. Douille polaire (100) selon l'une des revendications 1 à 7,
l'élément de raccordement (10') étant conçu en au moins deux parties, au moins un insert fileté (16) étant enrobé dans une zone de l'élément de raccordement (10').

10. Douille polaire (100) selon l'une des revendications 1 à 9,
l'élément de raccordement (10, 10'), l'élément de liaison (30) et l'élément de contact (20) étant formés d'un seul tenant.

11. Douille polaire (100) selon l'une des revendications 1 à 10,
la douille polaire (100) étant conçue pour être coulée ou encapsulée dans un boîtier (200) du système de stockage d'énergie, en particulier dans un élément de recouvrement du système de stockage d'énergie.

12. Douille polaire (100) selon l'une des revendications 1 à 11,
l'élément de raccordement (10, 10') comportant un évidement (14).

13. Douille polaire (100) selon l'une des revendications 1 à 12,
l'élément de contact (20) comportant une ouverture traversante (26).

14. Douille polaire (100) selon la revendication 13,
l'ouverture traversante (26) étant effilée, et/ou
l'ouverture traversante (26) étant conçue de telle sorte que l'ouverture traversante (26) comporte au moins deux zones d'inclinaisons différentes, ou l'ouverture traversante étant effilée de manière continue.

15. Système de stockage d'énergie comprenant au moins une douille polaire (100) selon l'une des revendications précédentes,
le système de stockage d'énergie comportant un boîtier (200) et un grand nombre de cellules de stockage d'énergie disposées dans le boîtier (200), la douille polaire (100) étant disposée dans une partie de boîtier, en particulier dans un élément de recouvrement du boîtier (200), et reçue de manière qu'un espace intérieur du boîtier (200) soit rendu étanche par rapport à l'environnement extérieur au moyen de la douille polaire (100), et la douille polaire (100) étant reliée électriquement au grand nombre de cellules de stockage d'énergie et pouvant être reliée électriquement à des consommateurs électriques.
